(19) **Europäisches Patentamt**

**European Patent Office**

**Office européen des brevets**

(11) **EP 0 798 093 B1**

(12) **EUROPÄISCHE PATENTSCHRIFT**

(45) Veröffentlichungstag und Bekanntmachung des Hinweises auf die Patenterteilung:
**04.10.2001 Patentblatt 2001/40**

(51) Int Cl.7: **B29B 7/48**, B01F 7/04

(21) Anmeldenummer: **97104222.1**

(22) Anmeldetag: **13.03.1997**

(54) **Selbstreinigender Reaktor/Mischer für hochviskose und kohäsive Mischgüter**

Self-cleaning reactor/mixer for cohesive and high viscosity materials

Réacteur-mélangeur autonettoyant pour des matériaux cohésifs et à haute viscosité

(84) Benannte Vertragsstaaten:
**BE CH DE ES FR GB IT LI NL**

(30) Priorität: **26.03.1996 DE 19611852**

(43) Veröffentlichungstag der Anmeldung:
**01.10.1997 Patentblatt 1997/40**

(73) Patentinhaber: **BAYER AG**
**51368 Leverkusen (DE)**

(72) Erfinder:
• **Schebesta, Klaus**
**51371 Leverkusen (DE)**
• **Schuchardt, Heinrich**
**51373 Leverkusen (DE)**
• **Ullrich, Martin**
**51375 Leverkusen (DE)**

(56) Entgegenhaltungen:
**EP-A- 0 517 068**   **EP-A- 0 638 354**
**EP-A- 0 715 881**   **EP-A- 0 715 882**
**FR-A- 1 197 720**

EP 0 798 093 B1

## Beschreibung

Die Erfindung betrifft einen vollständig selbstreinigenden Reaktor/Mischer mit großem, freien nutzbaren Volumen, der sich kinematisch selbst reinigt, bestehend aus zwei oder mehr parallelen gegensinnig rotierenden Wellen, auf denen sich spiralförmig angeordnet axial versetzte Paddel mit Abstreifern auf der Vorder- und Rückseite der Paddel befinden, und einem umschließenden Gehäuse. Indem die Abstreifer auf der stromaufwärts gerichteten Seite der Paddel alle nach außen fördern und die Abstreifer auf der stromabwärts gerichteten Seite der Paddel alle nach innen fördern, wird eine axiale Förderung erreicht.

Der Mischer dient zur verfahrenstechnischen Behandlung von Fluiden und kohäsiven Schüttgütern. Der Mischer ist vollständig kinematisch selbstreinigend und weist ein großes freies Nutzvolumen auf.

Unter anderem bei der Erzeugung und Verarbeitung von Kunststoffen und Kautschuk müssen hochviskose Flüssigkeiten verfahrenstechnisch behandelt werden. Insbesonders werden Apparate zum Mischen, Ausdampfen und Reagieren benötigt. Diese Mischer müssen eine gute Mischwirkung haben und, z.B. im Falle der Ausdampfung flüchtiger Komponenten, auch eine schnelle Erneuerung ihrer freien Oberflächen ermöglichen.

Produktablagerungen an den Wänden solcher Mischer z.B bei Polymerisationsreaktionen können zu Verfahrensbeeinträchtigungen führen. In den Ablagerungen werden z.B. unerwünschte Nebenreaktionen aufgrund der wesentlich verlängerten Verweilzeit der Reaktionsmischung im Mischer begünstigt. Dies führt zur Verunreinigung des Produktes. Produktablagerungen an den Wänden können durch kinematische Selbstreinigung des Mischers vermieden werden.

Im Hinblick auf die Minimierung der Apparatekosten ist dabei ein möglichst großes freies Volumen für das Mischgut anzustreben.

Bei kontinuierlichen Hochviskosprozessen kommt zusätzlich der axialen Förderung des Mischgutes durch den Reaktor eine große Bedeutung zu. Die Förderung sollte innerhalb der vorgesehenen Reaktionszeit erfolgen. Häufig wird eine große Anzahl äquivalenter Rührbehälter benutzt, um bei Polymerisationen eine enge Molmassenverteilung zu erhalten und bei anderen Reaktionen Nebenreaktionen einzuschränken. Dies erfordert eine geringe Rückvermischung innerhalb des Mischapparates.

Zum Abzug von Brüden bei Ausdampf- und Kondensationsprozessen ist eine hohe axiale Durchlässigkeit ebenfalls vorteilhaft.

Eine gute Lösung der Transportaufgabe stellen Extruder dar. In der Ausführung als zweiwellige Extruder sind sie auch vollständig kinematisch selbstreinigend realisierbar. Bei bekannten selbstreinigenden Extrudern ist das nutzbare Füllvolumen jedoch regelmäßig auf unter 50 %, typischerweise auf kleiner 25 % beschränkt. Auf Grund der resultierend hohen Apparatekosten sind daher nur Reaktionen mit einer Verweilzeit unter drei Minuten wirtschaftlich durchführbar.

Die Losung des Selbstreinigungsproblems unter Minimierung der Apparatekosten je Volumen ist z.B. mit Hilfe von mehrachsigen Scheibenreaktoren möglich. Der prinzipielle Aufbau eines solchen Reaktors wird u.a. in der Schrift FR-A-1 197 720 beschrieben.

In der Europäischen Offenlegungsschrift EP 0 460 466 A1 wird dargestellt, wie die Abstreifer eines Scheibenreaktors bei gegen- oder gleichsinniger Rotation gestaltet werden können, um eine kinematische Reinigung der Abstreifer und eine weitgehende Reinigung des kompletten Reaktors zu erreichen

Im US Patent 5 399 012 wird ein Reaktor mit gegensinnig rotierenden Wellen beansprucht, der vollständig kinematisch selbstreinigend ist.

In der Europäischen Patentanmeldung EP 0 638 354 A1 ist ein mehrachsiger Mischer/Reaktor dargestellt, bei dem auf gegensinnig rotierenden Achsen Förderschaufeln angebracht sind, die durch axial ausgedehnte Knetbarren verbunden sind.

Den genannten Schriften ist gemein, daß das Problem des axialen Transports nur gering beachtet wird.

In EP 0 460 466 A1 und US 5 399 012 wird vorgeschlagen, zur Erreichung des axialen Transportes die Abstreifer an den Mischerscheiben spiralförmig verdreht um die Rotationsachse auszuführen und damit das Forderungsprinzip in einem Extruder nachzuahmen. Die spiralförmig verdrehte Ausführung der Abstreifer verteuert die Herstellung solcher Mischer jedoch beträchtlich. Z.B. kann beim Fräsen der Oberflächen der Abstreifer nur noch eine linienförmige statt einer flächigen Behandlung erfolgen, oder es muß statt einer 3-Achsen- eine 5-Achsen-Fräsmaschine verwendet werden. In der Folge ist mit mehr als einer Verdopplung der Herstellungskosten der Rotoren zu rechnen.

Nachteilig an dem Mischer gemäß EP 0 460 466 A1 ist ferner, daß an den Gehäuseinnenwänden nicht gereinigte Zonen vorhanden sind. Zudem ist bei solchen Mischern keine, z.B. einen Brüdenabzug erleichternde axiale Durchlässigkeit gegeben, da die Scheiben des Mischers die Gasströmung behindern.

Diesen Nachteil weist der Mischer nach US 5 399 012 zwar nicht auf. Dieser Mischer zeigt jedoch zusätzlich noch ein hohes Maß an Rückvermischung.

In EP 0 638 354 soll die Förderung des Mischgutes durch Förderschaufeln erreicht werden, die schräg zur Rotationsachse stehen. Die Anordnung der Förderschaufeln erfolgt jedoch so, daß sie den axialen Durchtritt des Produktes verstellen und somit ihrer eigenen Förderaufgabe im Wege stehen.

Aufgabe der Erfindung war es einen Mischer/Reaktor zu finden, der die vollständige Selbstreinigung des Mischerinnenraumes ermöglicht, zusätzlich aber eine gute axiale Durchlässigkeit für z.B. den Brüdenstrom aufweist und eine gute Förderaktivität zeigt.

Die Aufgabe wird erfindungsgemäß gelöst durch einen Mischer/Reaktor gemäß Anspruch 1.

Dabei wird unter kinematischer Abreinigung die geringstmögliche gegenseitige Annäherung aneinandergrenzender Apparateteile verstanden, die angesichts des notwendigen freien Spiels der Teile möglich ist, das notwendig ist, um ein Verklemmen der Wellen zu vermeiden.

Unter der stromaufwärts gerichteten Seite wird hierbei die Seite verstanden, deren Fläche in Richtung des Einlasses zeigt. Die stromabwärts gerichtete Seite richtet sich in Richtung des Auslasses. Unter der Förderung der Abstreifer nach außen wird hier die Förderung von der Welle weg radial in Richtung der seitlichen Gehäusewand verstanden. Die Förderung nach innen bezeichnet die Gegenrichtung zur Welle hin.

In einer bevorzugten Ausführung sind alle geometrischen Schnittkanten von Abstreifren und Paddeln in einem beliebigen Radialschnitt entweder Epizykloiden oder Kreise um den Rotationsmittelpunkt.

Epizykloid ist die Kurve, die ein Punkt

$$\begin{pmatrix} x_1 \\ y_1 \end{pmatrix}$$

im Koordinatensystems eines Rotors 1 mit Mittelpunkt

$$\begin{pmatrix} a \\ 0 \end{pmatrix}$$

im Koordinatensystem des anderen Rotors 2 mit Mittelpunkt

$$\begin{pmatrix} 0 \\ 0 \end{pmatrix}$$

beschreibt:

$$\begin{pmatrix} x_2 \\ y_2 \end{pmatrix} = \begin{pmatrix} \cos(\omega_2 t) & \sin(\omega_2 t) \\ -\sin(\omega_2 t) & \cos(\omega_2 t) \end{pmatrix} * \left[ \begin{pmatrix} \cos(\omega_1 t) & -\sin(\omega_1 t) \\ \sin(\omega_1 t) & \cos(\omega_1 t) \end{pmatrix} * \begin{pmatrix} x_1 \\ y_1 \end{pmatrix} + \begin{pmatrix} a \\ 0 \end{pmatrix} \right]$$

Dabei sind $\omega_1$ und $\omega_2$ die Winkelgeschwindigkeiten der Rotoren, und entgegengesetzte Vorzeichen bezeichnen ein gegensinnig rotierendes System

In einer weiter bevorzugten Ausführung befindet sich in jedem geometrischen Radialschnitt durch den Mischer auf jedem Rotor nur ein Paddel.

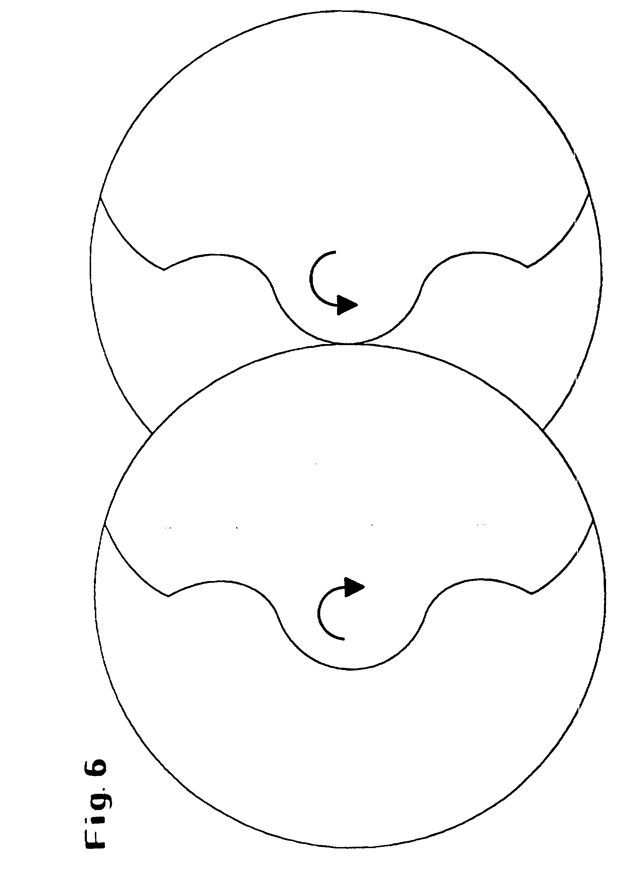

In dieser Ausführung sind die in axialer Richtung endständigen Paddel näherungsweise Halbscheiben (siehe Fig. 6). Soll der Austrag über die Stirnseite erfolgen, so hemmen diese Halbscheiben den Materialfluß. Ein leichterer Austrag ist möglich, indem in einer weiteren bevorzugten Ausführung auf die Halbscheiben zusätzlich Zahnscheiben aufgesetzt sind

In einer weiteren bevorzugten Ausführungsform sind die Stirnflächen der Abstreifer miteinander verbunden. Hierdurch vergrößert sich die axiale Gasdurchlässigkeit, da in der Ebene der Stirnflächen der Abstreifer nicht mehr beide Abstreiferquerschnitte versperrend zur Wirkung kommen, sondern diese Versperrung um die Verbindungsfläche reduziert ist. Die Torsionsbelastung, der die Paddel bei Angriff einer Kraft an einem Abstreifer ausgesetzt werden, wird verringert, da aus Welle 2, den Abstreifern 4, 5 und den Paddeln 3 einer jeden Welle eine versteifend wirkende Rahmenstruktur entsteht.

Ferner wird es erleichtert, die Abstreifer und Paddel zB. über ein Heizleitungssystem im Inneren der Rotoren mit einer Wärmeträgerflüssigkeit zu beheizen oder zu kühlen. Muß ansonsten sowohl der Beheizungsvor- als auch -rücklauf durch den Fuß eines jeden Paddels geführt werden, so kann hier der Verlauf durch den Fuß des ersten Paddels einer Folge miteinander verbundener Paddel und Abstreifer geführt werden, während die weiteren Heizleitungen dieser Anordnung folgen. Schließlich wird der Rücklauf durch den Fuß des letzten Paddels der Folge unter einander verbundener Paddel und Abstreifer zur Welle zurückgeführt.

Figuren

Fig. 1 zeigt den prinzipiellen Aufbau eines erfindungsgemäßen Mischer/Reaktors

Fig. 2 zeigt in perspektivischer Darstellung einen erfindungsgemäßen Reaktor. Das Gehäuse ist zur Vereinfachung nur teilweise dargestellt.

Fig. 3 zeigt einen Radialschnitt entsprechend Linie A-A in Fig 1 durch den Reaktor nach Fig. 2.

Fig. 4 zeigt in Momentaufnahmen einen Radialschnitt entsprechend Linie A-A in Fig. 1 durch den Reaktor nach Fig. 2.

Fig. 5 zeigt in einem Radialschnitt entsprechend Linie A-A in Fig. 1 durch den Reaktor nach Fig. 2, in dem ein Rotor festgehalten wurde, die durch den anderen Rotor überstrichene Fläche.

Fig. 6 zeigt in einem Radialschnitt entsprechend Linie B-B in Fig. 1 durch den Reaktor nach Fig. 2 die endständigen Paddel.

Fig. 7 zeigt in einem Radialschnitt entsprechend Linie B-B in Fig 1 durch den Reaktor nach Fig. 2, in dem ein Rotor festgehalten wurde, die durch den anderen Rotor überstrichene Fläche.

Fig. 8 zeigt einen erfindungsgemäßen Reaktor, bei dem zur Unterstützung der Förderung am Austritt ein Zahnscheibenpaar am axialen Ende angebracht wurde.

Fig. 9 zeigt in einem Radialschnitt das endständige Zahnradpaar des Reaktors nach Fig 8.

Fig. 10 zeigt in einem Radialschnitt durch das endständige Zahnradpaar des Reaktors nach Fig. 8, in dem ein Zahnrad festgehalten wurde, die durch das andere Zahnrad überstrichene Fläche.

Fig. 11 zeigt in perspektivischer Darstellung eine weitere bevorzugte Ausführung des erfindungsgemäßen Mischer/ Reaktors, bei der nach innen und nach außen fördernde Abstreifer an ihren Stirnflächen miteinander verbunden sind. Das Gehäuse 1 ist der Übersichtlichkeit halber nur teilweise dargestellt.

Fig. 12 zeigt den Mischer aus Fig. 2 in einer anderen Ansicht. Jedoch sind die halbscheibenförmigen endständigen Paddel nicht dargestellt.

Fig. 13 3 zeigt in perspektivischer Darstellung ein mögliches Heizleitungssystem zur Flüssigbeheizung des Mischers/Reaktors in Fig. 11.

**Beispiele**

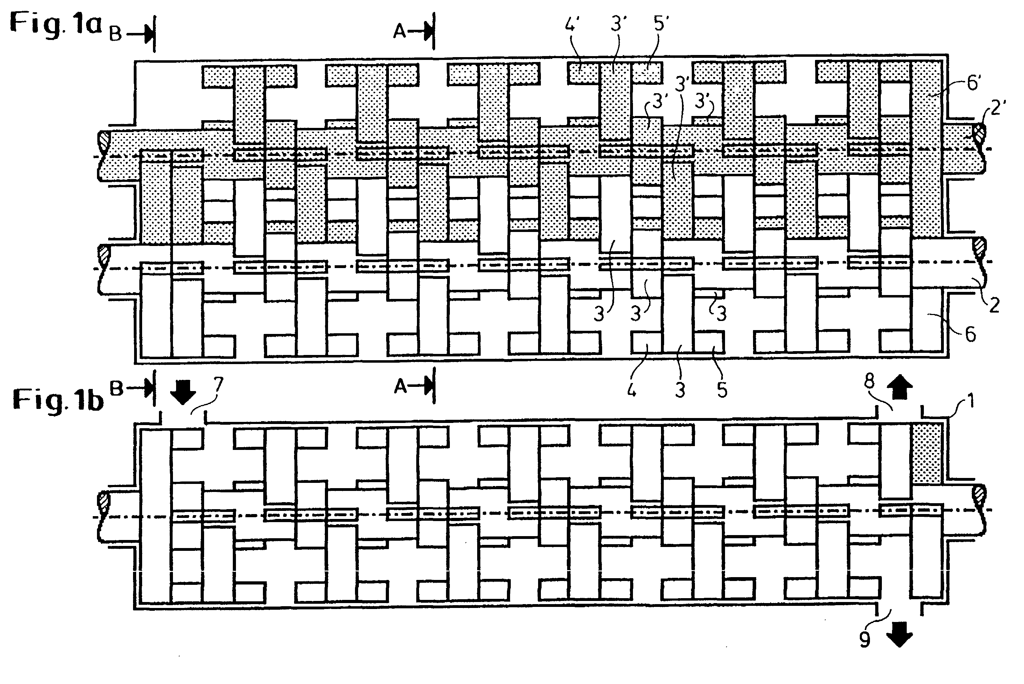

In Fig. 1 ist der Grundaufbau eines erfindungsgemäßen Scheibenreaktors gezeigt.

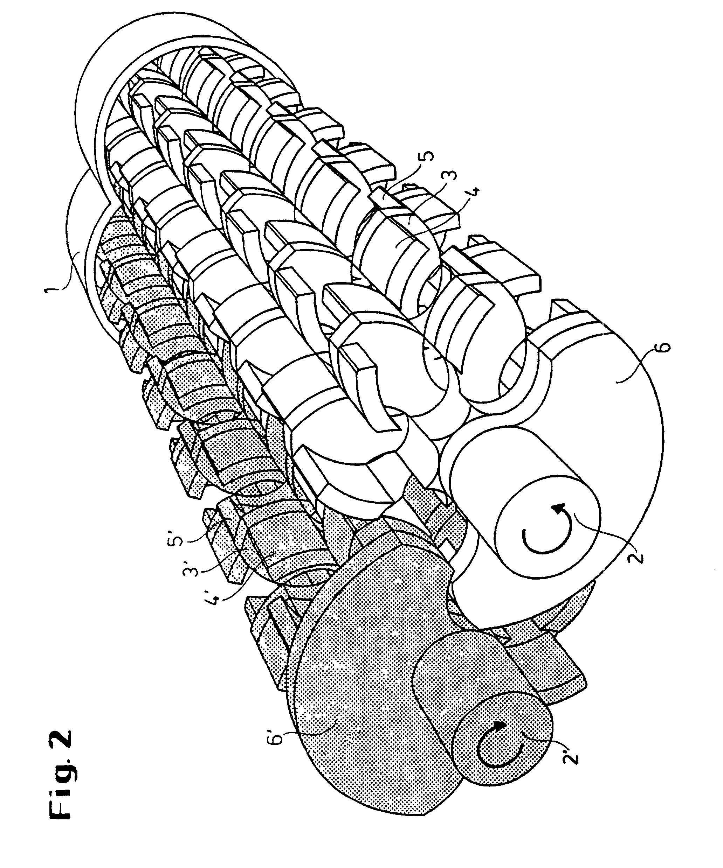

Für das Verständnis der Kinematik sind Radialschnitte des erfindungsgemäßen Mischers entscheidend. Entsprechend ist in den Figuren 2, 3, 4, 5, 6 und 8 Radialschnitte entsprechend der Schnitte A-A und B-B aus Fig. 1 dargestellt.

**Beispiel 1**

Fig 2 zeigt eine perspektivische Darstellung der Wellen 2, 2', Paddel 3, 3' und Abstreifer 4, 4', 5, 5' eines erfindungsgemäßen Reaktor/Mischers. Das Gehäuse 1 ist der Übersichtlichkeit halber nur teilweise dargestellt Die Wellen 2, 2' rotieren gleichschnell gegensinnig. In jedem Radialschnitt weist jede Welle 2, 2' ein Paddel 3, 3' auf. Die endständigen Paddel 6, 6' sind näherungsweise Halbscheiben. Die anderen Paddel 3, 3' sind spiralförmig angeordnet und axial versetzt auf den Wellen 2, 2' angeordnet. Auf Vorder- und Rückseite tragen sie je einen Abstreifer 4, 4', 5 , 5'. Bei der eingezeichneten Rotationsrichtung fördern alle vor den Paddeln befindlichen Abstreifer 4, 4' nach außen und alle hinter den Paddeln befindlichen Abstreifer 5, 5' nach innen. Dadurch wird eine Förderung vom Betrachter weg bewirkt. In Radialschnitten sind alle Schnittkanten entweder Epizykloiden, nämlich dann, wenn die Reinigung durch eine Kante erfolgt, oder Kreise um den Rotationsmittelpunkt, nämlich dann, wenn die Reinigung durch eine Fläche erfolgt.

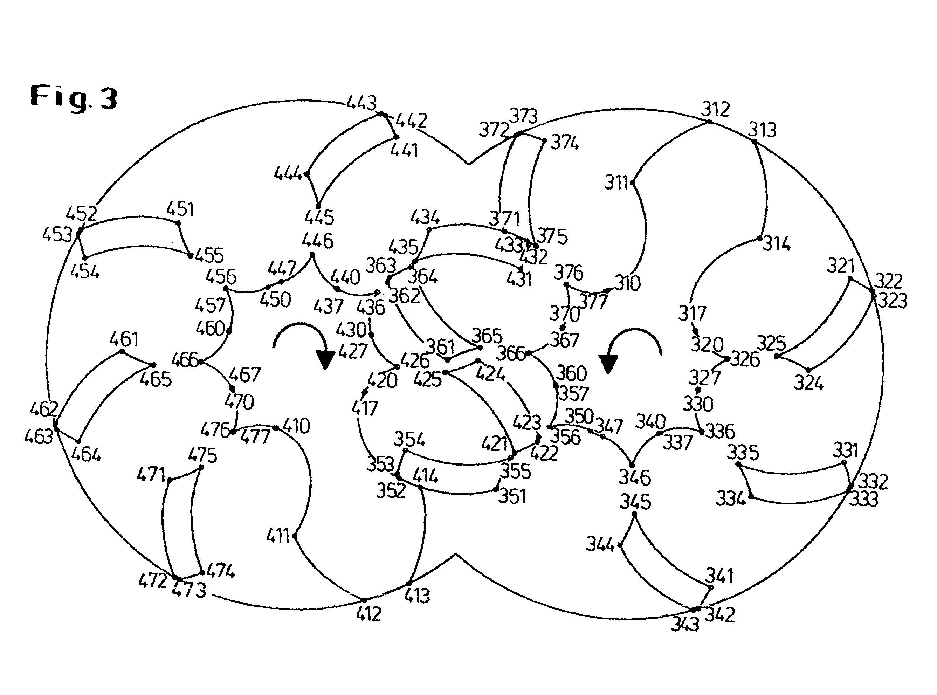

Fig. 3 zeigt einen Radialschnitt gemäß Linie A-A in Fig. 1 durch den Reaktor/Mischer nach Fig. 2. Anhand dieser Zeichnung soll die gegenseitige Abreinigung erläutert werden.

Fläche 311-312 wird gereinigt von der Kante 444,
Fläche 312-313 wird gereinigt von der Fläche 447-450,
Flache 313-314 wird gereinigt von der Kante 451,
Fläche 314-317 wird gereinigt von der Kante 452,
Fläche 317-320 wird gereinigt von der Fläche 452-453,
Fläche 320-326 wird gereinigt von der Kante 453,
Fläche 325-321 wird gereinigt von der Kante 453,
Fläche 321-322 wird gereinigt von der Kante 454,
Fläche 322-323 wird gereinigt von der Fläche 457-460,
Fläche 323-324 wird gereinigt von der Kante 461,
Fläche 324-325 wird gereinigt von der Kante 462,
Fläche 326-327 wird gereinigt von der Kante 462,
Fläche 327-330 wird gereinigt von der Fläche 462-463,
Fläche 330-336 wird gereinigt von der Kante 463,
Fläche 335-331 wird gereinigt von der Kante 463,
Fläche 331-332 wird gereinigt von der Kante 464,
Fläche 332-333 wird gereinigt von der Fläche 467-470,
Fläche 333-334 wird gereinigt von der Kante 471,
Fläche 334-335 wird gereinigt von der Kante 472,
Fläche 336-337 wird gereinigt von der Kante 472,
Fläche 337-340 wird gereinigt von der Fläche 472-471,
Fläche 340-346 wird gereinigt von der Kante 473,
Fläche 345-341 wird gereinigt von der Kante 473,
Fläche 341-342 wird gereinigt von der Kante 474,
Fläche 342-343 wird gereinigt von der Fläche 477-410,
Fläche 343-344 wird gereinigt von der Kante 411,
Fläche 344-345 wird gereinigt von der Kante 412,
Fläche 345-347 wird gereinigt von der Kante 412,
Fläche 347-350 wird gereinigt von der Fläche 412-413,
Fläche 350-356 wird gereinigt von der Kante 413,
Fläche 355-351 wird gereinigt von der Kante 413,
Fläche 351-352 wird gereinigt von der Kante 414,
Fläche 352-353 wird gereinigt von der Fläche 417-420,
Fläche 353-354 wird gereinigt von der Kante 421,
Fläche 354-355 wird gereinigt von der Kante 422,
Fläche 356-357 wird gereinigt von der Kante 422,
Fläche 357-360 wird gereinigt von der Fläche 422-423,
Fläche 360-366 wird gereinigt von der Kante 423,
Fläche 365-361 wird gereinigt von der Kante 423,
Fläche 361-362 wird gereinigt von der Kante 424,
Fläche 362-363 wird gereinigt von der Fläche 427-430,
Fläche 363-364 wird gereinigt von der Kante 431,
Fläche 364-365 wird gereinigt von der Kante 432,
Fläche 366-367 wird gereinigt von der Kante 432,
Fläche 367-370 wird gereinigt von der Fläche 432-433,
Fläche 370-376 wird gereinigt von der Kante 433,
Fläche 375-371 wird gereinigt von der Kante 433,
Fläche 371-372 wird gereinigt von der Kante 434,
Fläche 372-373 wird gereinigt von der Fläche 437-440,

Fläche 373-374 wird gereinigt von der Kante 441,
Fläche 374-375 wird gereinigt von der Kante 442,
Fläche 376-377 wird gereinigt von der Kante 442,
Fläche 377-310 wird gereinigt von der Fläche 442-443,

Fläche 411-412 wird gereinigt von der Kante 344,
Fläche 412-413 wird gereinigt von der Fläche 347-350,
Fläche 413-414 wird gereinigt von der Kante 351,
Fläche 414-417 wird gereinigt von der Kante 352,
Fläche 417-420 wird gereinigt von der Fläche 352-353,
Fläche 420-426 wird gereinigt von der Kante 353,
Fläche 425-421 wird gereinigt von der Kante 353,
Fläche 421-422 wird gereinigt von der Kante 354,
Fläche 422-423 wird gereinigt von der Fläche 357-360,
Fläche 423-424 wird gereinigt von der Kante 361,
Fläche 424-425 wird gereinigt von der Kante 362,
Fläche 426-427 wird gereinigt von der Kante 362,
Fläche 427-430 wird gereinigt von der Fläche 362-363,
Fläche 430-436 wird gereinigt von der Kante 363,
Fläche 435-431 wird gereinigt von der Kante 363,
Fläche 431-432 wird gereinigt von der Kante 364,
Fläche 432-433 wird gereinigt von der Fläche 367-370,
Fläche 433-434 wird gereinigt von der Kante 371,
Fläche 434-435 wird gereinigt von der Kante 372,
Fläche 436-437 wird gereinigt von der Kante 372,
Fläche 437-440 wird gereinigt von der Fläche 372-371,
Fläche 440-446 wird gereinigt von der Kante 373,
Fläche 445-441 wird gereinigt von der Kante 373,
Fläche 441-442 wird gereinigt von der Kante 374,
Fläche 442-443 wird gereinigt von der Fläche 377-310,
Fläche 443-444 wird gereinigt von der Kante 311,
Fläche 444-445 wird gereinigt von der Kante 312,
Fläche 445-447 wird gereinigt von der Kante 312,
Flache 447-450 wird gereinigt von der Fläche 312-313,
Fläche 450-456 wird gereinigt von der Kante 313,
Fläche 455-451 wird gereinigt von der Kante 313,
Fläche 451-452 wird gereinigt von der Kante 314,
Fläche 452-453 wird gereinigt von der Fläche 317-320,
Fläche 453-454 wird gereinigt von der Kante 321,
Fläche 454-455 wird gereinigt von der Kante 322,
Fläche 456-457 wird gereinigt von der Kante 322,
Fläche 457-460 wird gereinigt von der Fläche 322-323,
Fläche 460-466 wird gereinigt von der Kante 323,
Fläche 465-461 wird gereinigt von der Kante 323,
Fläche 461-462 wird gereinigt von der Kante 324,
Fläche 462-463 wird gereinigt von der Fläche 327-330,
Fläche 463-464 wird gereinigt von der Kante 331,
Fläche 464-465 wird gereinigt von der Kante 332,
Fläche 466-467 wird gereinigt von der Kante 332,
Fläche 467-470 wird gereinigt von der Fläche 332-333,
Fläche 470-476 wird gereinigt von der Kante 333,
Fläche 475-471 wird gereinigt von der Kante 333,
Fläche 471-472 wird gereinigt von der Kante 334,
Fläche 472-473 wird gereinigt von der Fläche 337-340,
Fläche 473-474 wird gereinigt von der Kante 341,
Fläche 474-475 wird gereinigt von der Kante 342,
Fläche 476-477 wird gereinigt von der Kante 342,
Fläche 477-410 wird gereinigt von der Fläche 342-343.

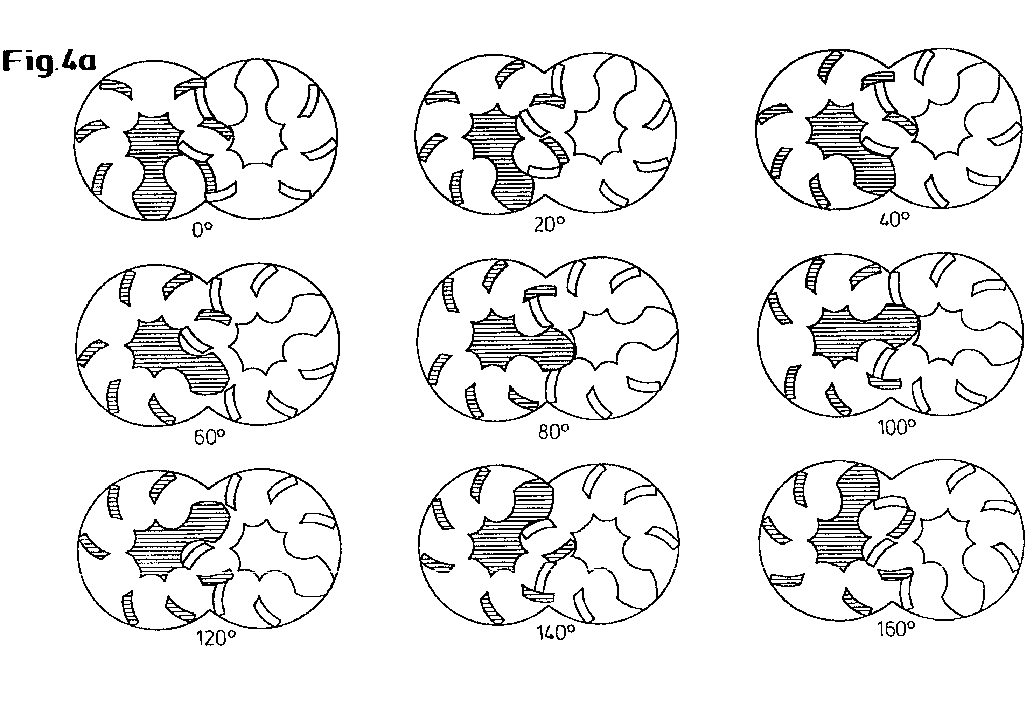

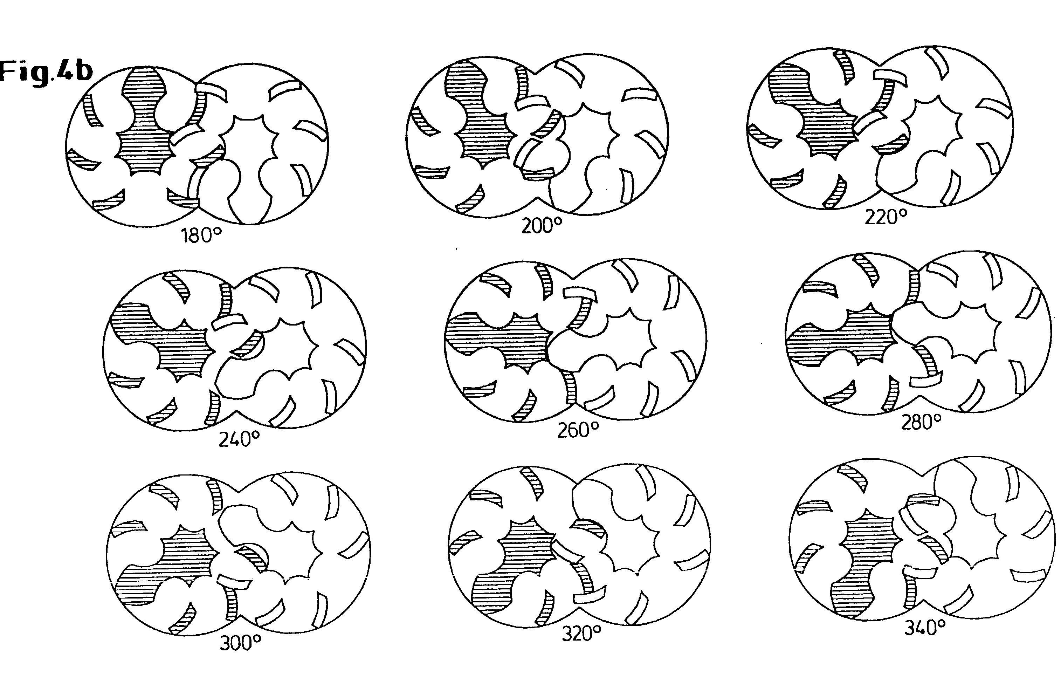

Die gegenseitige Bewegung der Rotoren wird deutlich in den Figuren 4a und 4b, in denen derselbe Radialschnitt wie in Fig. 3 gezeigt ist, jedoch in aufeinanderfolgende Phasenbilder getrennt, beginnend mit 0°, zwischen denen jeweils eine Drehung von 20° liegt.

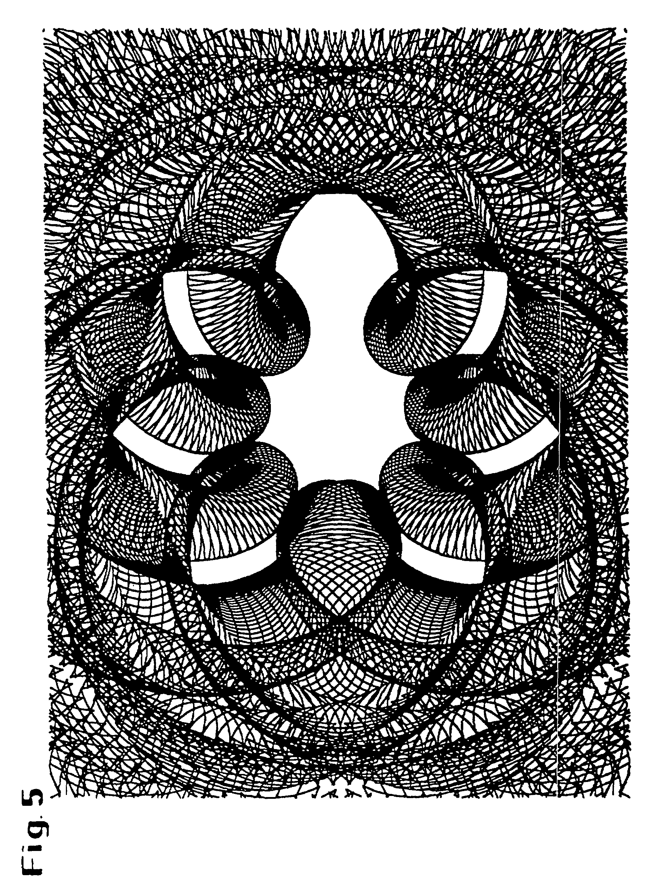

Die allseitige Abreinigung wird in Fig. 5 deutlich. Hier ist derselbe Radialschnitt wie in den Figuren 3 und 4 dargestellt. Jedoch wird ein Rotor als Bezugssystem ruhend gezeigt und die verschiedenen Phasenlagen des anderen Rotors sind dann relativ zum Rotor überlagert gedruckt worden. Es wird ersichtlich, daß alle Schnittkanten, die im Radialschnitt zu sehen sind, gereinigt werden. Da ferner bis auf die von dem "ruhenden" Rotor selbst eingenommene Fläche die Gesamtfläche innerhalb des Gehäusedurchmessers gereinigt wird, wird auch eine komplette Reinigung der Stirnseiten der nachfolgenden Paddel und Abstreifer deutlich.

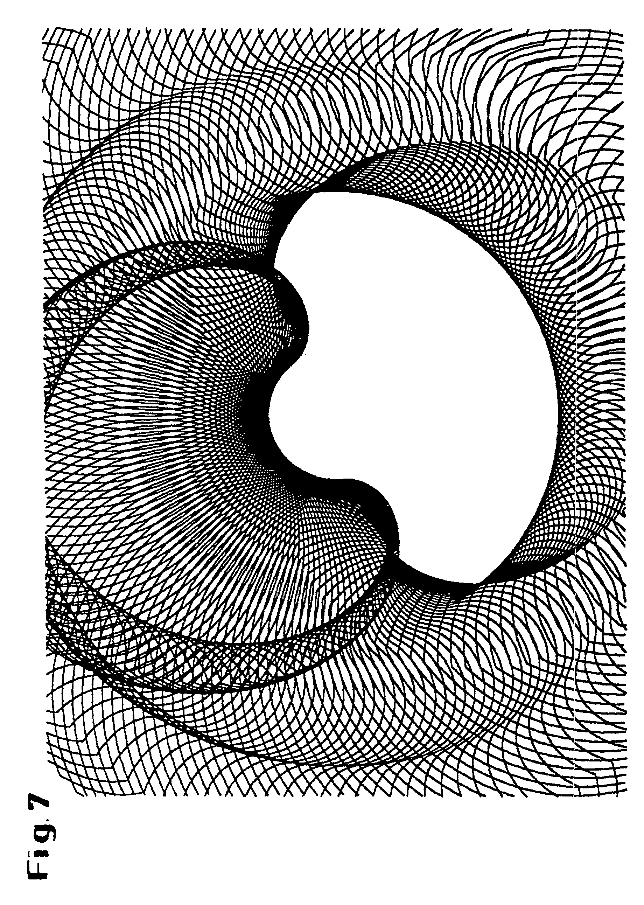

In Fig. 6 ist ein Radialschnitt entsprechend der Linie B-B nach Fig. 1 durch die endständigen Paddel des Mischer/Reaktors nach Fig. 2 gezeigt. In Fig. 7 ist wiederum ein Rotor als "ruhend" zusammmen mit der Relativbewegung des anderen Rotors dargestellt. Die verschiedenen Phasenlagen des anderen Rotors sind dann relativ zum "ruhenden" Rotor überlagert gedruckt worden Auch hier ist die allseitige Reinigung deutlich.

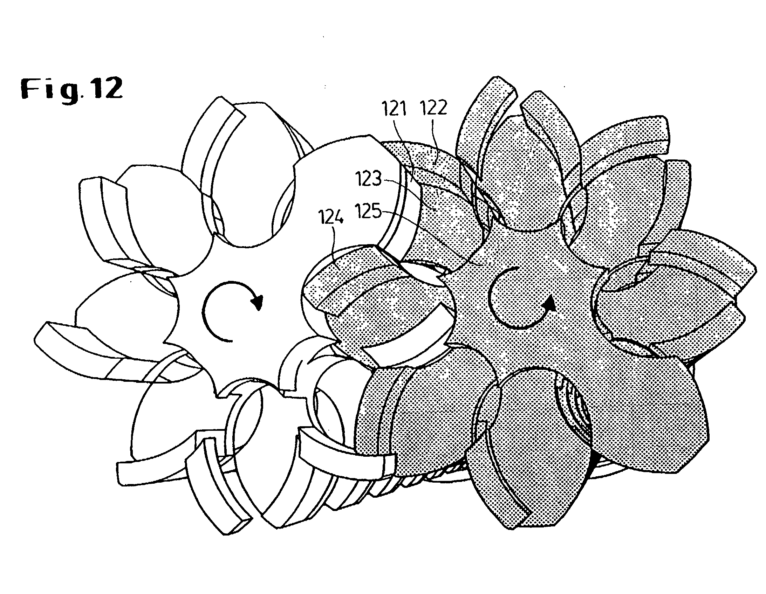

In Fig. 12 ist derselbe Mischer wie in Figur 2 aus einer anderen Perspektive gezeigt. Jedoch sind die endständigen Paddel in Fig. 12 nicht dargestellt. An dieser Figur läßt sich die axiale Förderwirkung vereinfacht erklären. Die Abstreifer 122 und 124 bilden zusammen mit dem Paddel 123 und der Welle 125 eine Kammer, in die bei der Rotation der Wellen das Paddel 121 hineinfahrt. Dabei wird das enthaltene Produkt aus der Kammer herausgepreßt. Es kann nur axial in Richtung auf den Betrachter oder durch die Lücken zwischen den Paddeln 122 bzw. 124 und der Welle entweichen. Ein Ausweichen in axialer Richtung weg vom Betrachter ist nicht möglich, da diese Seite vom Paddel 123 verschlossen ist Insgesamt ergibt sich eine Produktbewegung, bei der die nach außen fördernden Abstreifer 121 sich stromaufwärts der Paddel und die nach innen fördernden Abstreifer sich stromabwärts der Paddel befinden.

### Beispiel 2

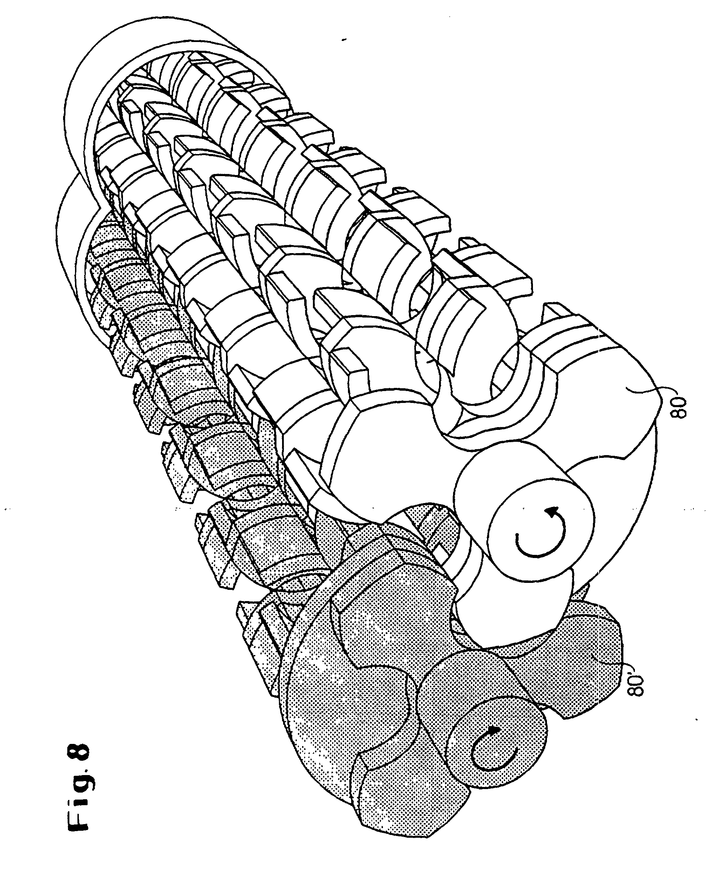

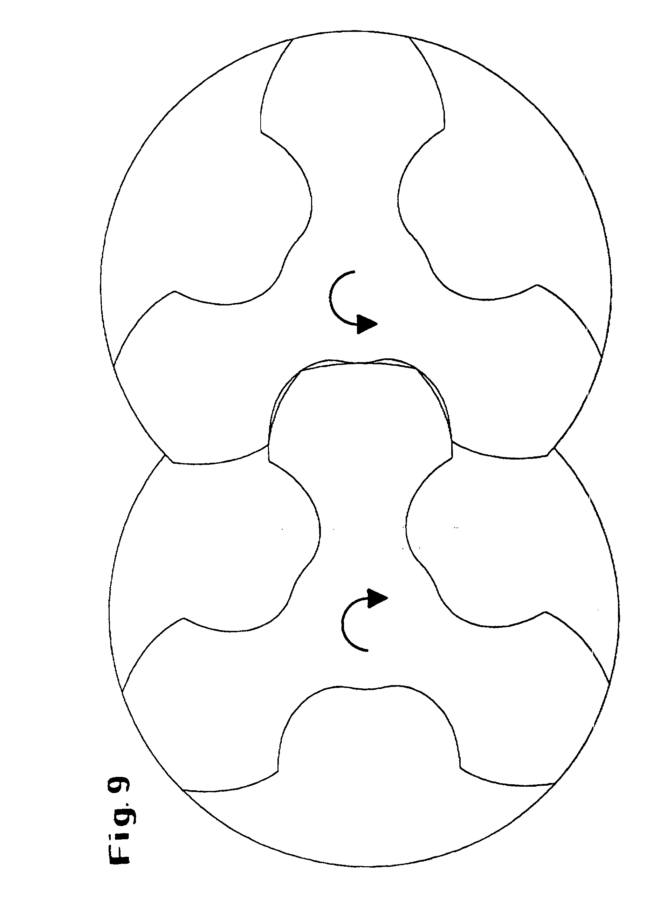

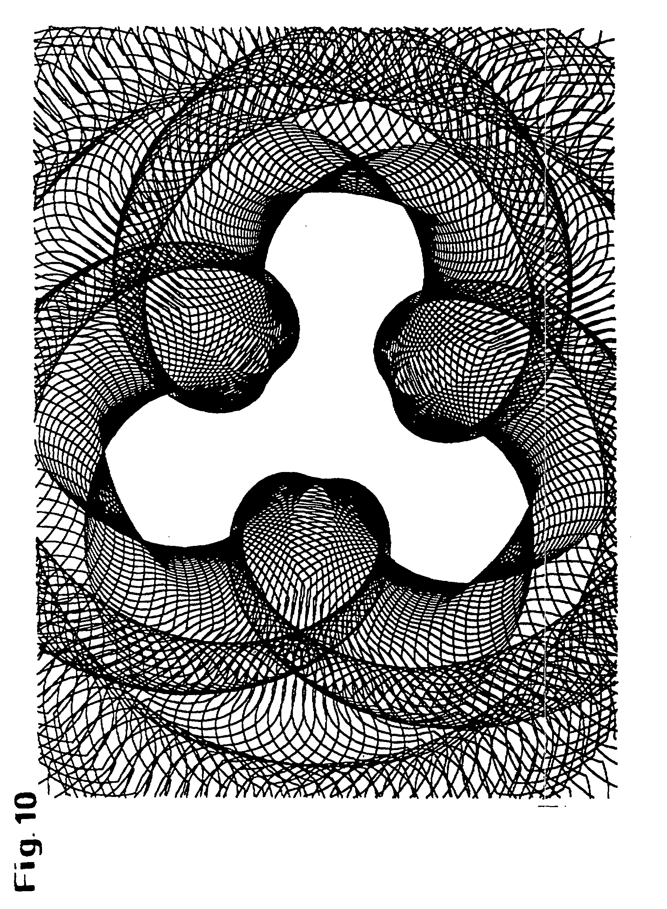

In Fig. 8 ist eine weitere bevorzugte Ausführungsform des erfindungsgemäßen Mischers gezeigt. Die Geometrie ist identisch zu Beispiel 1 bis auf die an den axialen Enden der Wellen hinzugefügten Zahnscheiben 80, 80'. Die Selbstreinigung solcher Zahnscheiben ist in US Patent 5 399 012 beschrieben. Fig. 9 zeigt einen Radialschnitt durch die endständigen Zahnräder 80, 80'. In Fig. 10 ist ein Radialschnitt durch die Zahnräder gezeigt, bei dem ein Zahnrad als relativ ruhend dargestellt ist und bei dem die verschiedenen Phasenlagen des in Eingriff befindlichen Zahnrades der anderen Welle übereinander gedruckt sind. Die allseitige Reinigung ist deutlich erkennbar.

### Beispiel 3

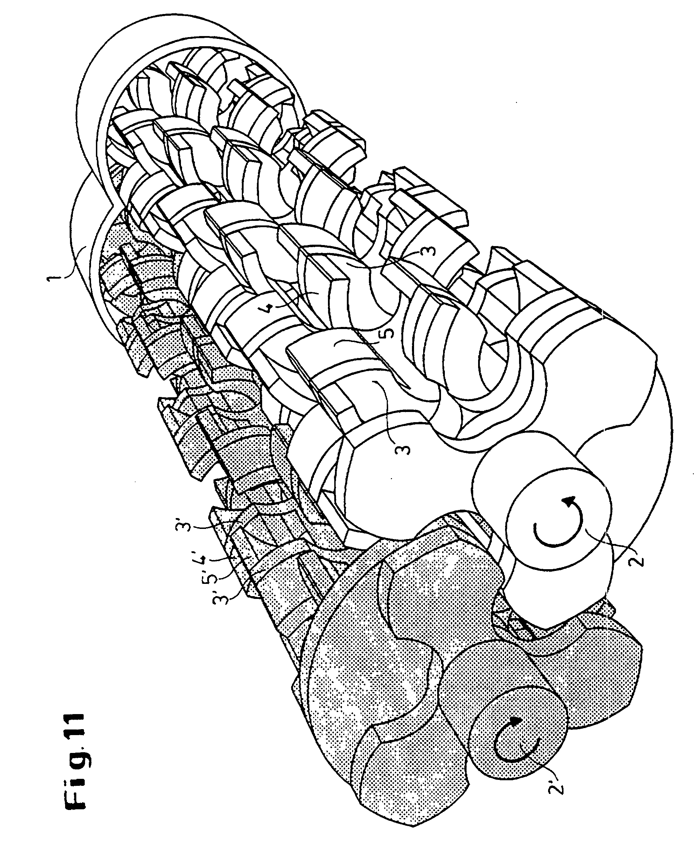

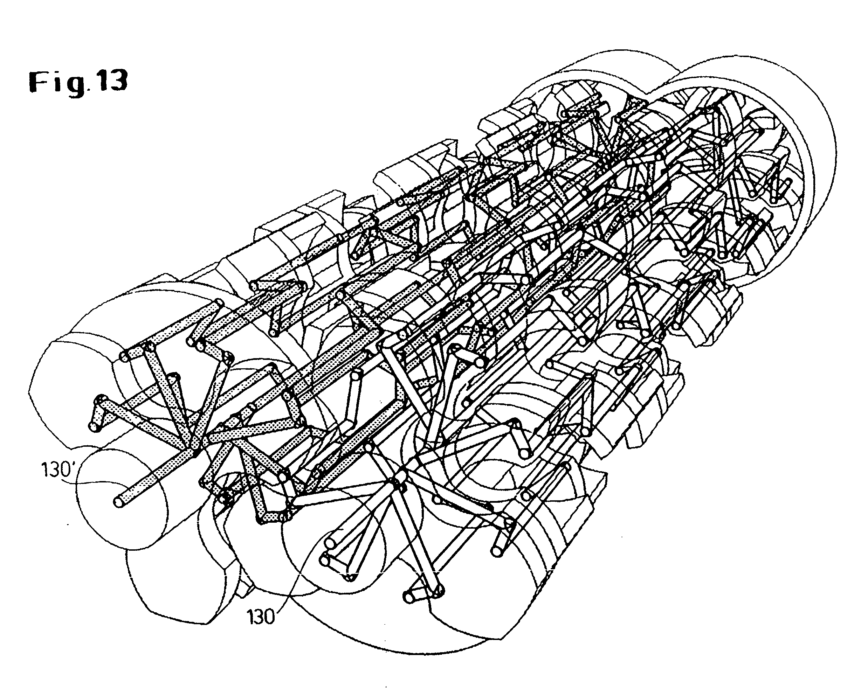

In Fig. 11 ist eine weitere bevorzugte Ausführungsform gezeigt. Sie unterscheidet sich von Beispiel 2 darin, daß die nach innen 5, 5' und nach außen fördernden Abstreifer 4, 4' an ihren Stirnseiten miteinander verbunden sind. Hierdurch vergrößert sich die axiale Gasdurchlässigkeit, da in der Ebene der Stirnflächen der Abstreifer nicht mehr beide Abstreiferquerschnitte versperrend zur Wirkung kommen, sondern diese Versperrung um die Verbindungsfläche reduziert ist. Die Torsionsbelastung, der die Paddel bei Angriff einer Kraft an einem Abstreifer ausgesetzt werden, wird verringert, da aus Welle 2, den Abstreifern 4, 5 und den Paddeln 3 einer jeden Welle eine versteifend wirkende Rahmenstruktur entsteht. Ferner wird es erleichtert, die Abstreifer und Paddel mit einem Wärmeträgermedium z.B. über ein Heizleitungssystem 130, 130' im Inneren der Rotoren zu beheizen oder zu kühlen. Muß bei den Rotoren der Beispiele 1 und 2 sowohl der Beheizungsvor- als auch -rücklauf durch den Fuß eines jeden Paddels geführt werden, so reicht es hier, die Heizleitungen der Folge von miteinander verbundenen Paddeln und Abstreifern folgen zu lassen. Eine zweckmäßige Anordnung von Heizleitungen in den Einbauten eines Mischers gemäß der Erfindung ist in Fig. 13 dargestellt.

### Patentansprüche

**1.** Mischer/Reaktor bestehend aus zwei oder mehr parallelen gegensinnig rotierenden Wellen 2, 2', auf denen sich spiralförmig angeordnet axial versetzte Paddel 3, 3' mit Abstreifern 4, 4', 5, 5' auf der Vorder- und Rückseite der Paddel 3, 3' befinden, und einem umschließenden Gehäuse 1 mit einem Einlaß 7 und einem Auslaß 9 sowie gegebenenfalls einer Brüdenöffnung 8,
wobei die Abstreifer 4, 4' auf der stromaufwärts gerichteten Seite der Paddel 3, 3' alle nach außen fördern und die Abstreifer 5, 5' auf der stromabwärts gerichteten Seite der Paddel 3, 3' alle nach innen fördern und alle Seiten der Abstreifer 4, 4', 5, 5' und Paddel 3, 3' vollständig kinematisch gereinigt werden.

**2.** Mischer/Reaktor nach Anspruch 1 **dadurch gekennzeichnet, daß** alle Schnittkanten von Abstreifern 4, 4', 5, 5' und Paddeln 3, 3' in einem beliebigen geometrischen Radialschnitt durch den Mischer entweder Epizykloiden oder Kreise um den Rotationsmittelpunkte sind:

3. Mischer/Reaktor nach Anspruch 1 oder 2 **dadurch gekennzeichnet, daß** sich in jedem geometrischen Radialschnitt auf jeder Welle 2, 2' nur ein Paddel 3, 3' befindet.

4. Mischer/Reaktor nach Anspruch 3 **dadurch gekennzeichnet, daß** an einem oder beiden Enden der Wellen 2, 2' in axialer Richtung auf das letzte Paddel 3, 3' folgend auf jeder Welle Zahnscheiben 80 bzw. 80' angebracht sind, die sich gegenseitig an ihrem Umfang abreinigen.

5. Mischer/Reaktor nach einem der Ansprüche 1 bis 4, **dadurch gekennzeichnet, daß** nach innen fördernde Abstreifer 5, 5' und nach außen fördernde Abstreifer 4, 4' an ihren Stirnseiten miteinander verbunden sind.

**Claims**

1. Mixer/reactor consisting of two or more parallel shafts (2, 2') rotating in opposite directions and on which helically arranged axially offset paddles (3,3') with scrapers (4, 4', 5, 5') are located on the front and back side of the paddles (3, 3'), and an enclosing housing (1) with an inlet (7) and an outlet (9) and optionally an exhaust vapour aperture (8), wherein the scrapers (4, 4') on the face of the paddle (3, 3') directed upstream all convey outwards and the scrapers (5, 5') on the face of the paddle (3, 3') directed downstream all convey inwards and all faces of the scrapers (4, 4', 5, 5') and paddles (3, 3') are cleaned completely kinematically.

2. Mixer/reactor according to claim 1, **characterised in that** all cutting edges of scrapers (4, 4', 5, 5') and paddles (3, 3') are either epicycloids or circles about the centre of rotation in any geometric radial section through the mixer.

3. Mixer/reactor according to claim 1 or 2, **characterised in that** only one paddle (3, 3') is located in each geometric radial section on each shaft (2, 2').

4. Mixer/reactor according to claim 3, **characterised in that** toothed discs (80 and 80'), which mutually clean each other at their periphery, are attached to one or both ends of the shafts (2, 2') in the axial direction following the last paddle (3, 3') on each shaft.

5. Mixer/reactor according to one of claims 1 to 4, **characterised in that** scrapers (5, 5') conveying inwards and scrapers (4, 4') conveying outwards are connected to one another at their end faces.

**Revendications**

1. Mélangeur-réacteur constitué par deux ou plusieurs arbres parallèles 2, 2' en rotation en sens opposés, sur lesquels sont agencées en forme spiralée des ailettes 3, 3' axialement décalées comportant des racleurs 4, 4', 5, 5' sur le côté avant et sur le côté arrière des ailettes 3, 3', et un boîtier de fermeture 1 comportant une admission 7 et une sortie 9 ainsi que le cas échéant une ouverture à vapeurs 8, les racleurs 4, 4' sur le côté dirigé en amont des ailettes 3, 3' effectuant tous un convoyage vers l'extérieur et les racleurs 5, 5' du côté dirigé en aval des ailettes 3, 3' effectuant tous un convoyage vers l'intérieur, et tous les côtés des racleurs 4, 4', 5, 5' et des ailettes 3, 3' sont nettoyés complètement par voie cinématique.

2. Mélangeur-réacteur selon la revendication 1, **caractérisé en ce que** toutes les arêtes d'intersection des racleurs 4, 4', 5, 5' et des ailettes 3, 3' dans une coupe radiale géométrique quelconque à travers le mélangeur sont soit des épicycloïdes soit des cercles autour du centre de rotation.

3. Mélangeur-réacteur selon l'une ou l'autre des revendications 1 et 2, **caractérisé en ce qu'**une seule ailette 3, 3' se trouve sur chaque arbre 2, 2' dans chaque coupe radiale géométrique.

4. Mélangeur-réacteur selon la revendication 3, **caractérisé en ce que** sur l'une ou sur les deux extrémités des arbres 2, 2', à la suite de la dernière ailette 3, 3' en direction axiale, des disques dentés 80 ou 80' sont agencés sur chaque arbre, qui se nettoient mutuellement au niveau de leur périphérie.

**5.** Mélangeur-réacteur selon l'une quelconque des revendications 1 à 4, **caractérisé en ce que** les racleurs 5, 5' convoyant vers l'intérieur et les racleurs 4, 4' convoyant vers l'extérieur sont reliés les uns aux autres au niveau de leurs faces frontales.

Fig.1a

Fig.1b

Fig. 2

Fig. 3

Fig.7a

**Fig.4b**

180°  200°  220°

240°  260°  280°

300°  320°  340°

EP 0 798 093 B1

Fig. 5

Fig. 6

Fig. 7

Fig.8

80

80'

Fig. 9

Fig. 10

Fig.11

Fig.12

121 122
123
124 125

EP 0 798 093 B1

EP 0 798 093 B1

Fig.13

23